# EUROPEAN PATENT APPLICATION

(11) **EP 2 549 420 A1**
(43) Date of publication of application: **23.01.2013**
(21) Application number: 11193858.5
(22) Date of filing: 15.12.2011
(51) Int. Cl.: G06Q 10/10

(54) **Corporate announcement generation**

(30) Priority: 21.07.2011 IN MU20862011
(71) Applicant: Tata Consultancy Services Limited, Maharashtra (IN)
(72) Inventor: Gupta, Devesh, 122001 Gurgaon (IN); Agarwal, Rahul, 122001 Gurgaon (IN)
(74) Representative: Dilg, Haeusler, Schindelmann Patentanwaltsgesellschaft mbH

(57) **Abstract**

Systems and methods related to generating corporate announcements. In one implementation, the method comprises capturing, by a computing device, corporate action information corresponding to at least one corporate action from at least one corporate news source. The method further comprises comparing the corporate action information with another corporate action information, captured from at least one other corporate news source, corresponding to the at least one corporate action. Based on the comparison, a relevance factor is evaluated. The relevance factor is indicative of completeness and accuracy of a composite corporate action information obtained by combining the corporate action information and the other corporate action information. The method furthermore comprises generating a corporate announcement, based on the relevance factor.

## Description

### TECHNICAL FIELD

The present subject matter, in general, relates to corporate actions, in particular, to a system and a method for generating corporate announcements.

### BACKGROUND

Corporate actions may be understood as different events that are initiated by commercial entities, such as corporations. Examples of different corporate actions include stock splits, mergers of a business entity with another business entity, acquisition by a business entity by another business, establishing a portion of the business entity as a stand-alone business entity, tender offers, exchanges, conversions, puts, full redemptions, partial redemptions, rights, warrants, reverse stock splits, consents, partial pre-refunding, full pre-refunding, liquidations, name changes, and stock dividends. Information regarding such corporate actions is of prime interest to those associated with the business entity. In certain instances, stakeholders of the business entity may be required to take certain actions in response to a corporate action. For example, if information regarding a tender invite is obtained, a stakeholder may want to respond to the same promptly. In cases where mergers or acquisitions of business entities occur, a shareholder may take decisions regarding buying or selling of shares of the business entities based on. Such actions are time critical. In many instances, the faster a stakeholder acts the greater business advantage he may derive. Therefore, it is significant for the stakeholders not only to be made aware of such corporate actions but also to have access to such information as promptly as possible.

For awareness, the stakeholders gather information corresponding to various corporate actions from corporate news sources, such as newspaper, television, and corporate websites. Alternatively, the stakeholders rely on various intermediary firms, such as financial institutions that collate information corresponding to various corporate actions from a range of sources, including information service providers, broker/dealers, sub-custodians, global custodians, investment managers, depositories, exchanges, as well as newspapers, news feeds, trade journals and the Web, and provide the collated information to its clients who are stakeholders of the commercial entities issuing corporate actions.

### SUMMARY

This summary is provided to introduce concepts related to generation of corporate announcements. These concepts are further described below in the detailed description. This summary is not intended to identify essential features of the claimed subject matter nor is it intended for use in determining or limiting the scope of the claimed subj ect matter.

Systems and methods related to generating corporate announcements. In one implementation, the method comprises capturing, by a computing device, corporate action information corresponding to at least one corporate action from at least one corporate news source. The method further comprises comparing the corporate action information with another corporate action information, captured from at least one other corporate news source, corresponding to the at least one corporate action. Based on the comparison, a relevance factor is evaluated. The relevance factor is indicative of completeness and accuracy of a composite corporate action information obtained by combining the corporate action information and the other corporate action information. The method furthermore comprises generating a corporate announcement, based on the relevance factor.

### BRIEF DESCRIPTION OF THE DRAWINGS

The detailed description is provided with reference to the accompanying figures. In the figures, the left-most digit(s) of a reference number identifies the figure in which the reference number first appears. The same numbers are used throughout the drawings to reference like features and components.

Fig. 1 illustrates a network environment implementing a corporate announcement generation system, in accordance with an embodiment of the present subject matter.

Fig. 2 illustrates components of the corporate announcement generation system, in accordance with an embodiment of the present subject matter.

Fig. 3 illustrates a method for corporate announcement generation, in accordance with an embodiment of the present subject matter.

### DETAILED DESCRIPTION

Conventionally, stakeholders manually obtain the corporate actions information corresponding to various corporate actions, for example, via telephone, faxes, newspapers, multiple corporate news sources, etc. Such manual process of obtaining the corporate action information may be a time consuming process and may not be considered as reliable as it is likely that corporate action information corresponding to one or more corporate actions may get missed out. Missing the corporate action information corresponding to any significant corporate action may be a loss of opportunity or may pose a business risk to the stakeholders.

Alternatively, stakeholders get associated with various corporate news sources which are intermediary firms, such as financial institutions or news agencies that provide such corporate action information to the stakeholders. Such intermediary firms use conventional systems for automatically capturing information corresponding to various corporate actions from corporate news sources that provide corporate actions information in a machine readable format. Examples of such machine readable formats include SWIFT ISO 15022, DTC-GCA, FT ID, Bloomberg, and the like. The corporate news sources may use any of such machine readable formats for providing corporate actions information. Corporate actions information in such machine readable formats may be read and automatically captured by such conventional computing systems employed at the intermediary firms. Such conventional computing systems in turn provide captured information to the stakeholders who are the clients of the intermediary firms.

However, the corporate action information captured by such conventional systems may often be incomplete. For example, the captured corporate action information from a first news source may indicate that company XYZ has announced dividend on XX/MM/YYYY date. However, dividend amount may not be mentioned in the corporate action information. Similarly, corporate action information captured from a second news source may indicate that the company XYZ has announced dividend of amount XXXX. In such a situation, a manual intervention is required. For example, a professional is required to study corporate action information from various sources and correlate the same to arrive at the complete corporate action information.

Further, the corporate action information obtained from one news source may be inaccurate or contradictory to corporate action information obtained from other news source. For example, captured corporate action information may indicate that the company XYZ has announced dividend of amount XXXX. While, another corporate action information may indicate the true corporate action information that the company XYZ has announced dividend of amount YYYY. In case conventional systems capture both the corporate action information, the dividend amount mentioned in both the information contradicts one another. In such cases, the conventional systems may either provide both the captured corporate action information to its clients, irrespective of whether the corporate action information is complete, incomplete, accurate or inaccurate or not provide the corporate action information at all. While in the former case the clients are deprived of information, in the latter situation, a professional is required to study the contradicting corporate action information and resolve the same. This may be a time consuming process, subj ect to manual errors.

Further, these conventional computing systems are programmed for reading a format specific to a particular corporate news source. However, these computing systems may require reprogramming in order to read formats which are provided by other corporate news sources. In addition, these computing systems can merely read the corporate actions information, but cannot perform a verification and/or validation of the corporate action which is usually left for a user of the computing system. Thus, conventional automated systems and methods fail to provide accurate and reliable corporate actions information without user intervention. Moreover, such conventional automated systems and methods also require time to time programming efforts for incorporating different formats provided by the various corporate news sources.

In accordance with the present subject matter, systems and methods of generating corporate announcements are described. The generated corporate announcements represent composite corporate action information, which is both complete and accurate. For generating corporate announcements, corporate action information, interchangeably referred to as information, corresponding to various corporate actions may be captured from a plurality of corporate news sources, interchangeably referred to as sources. Such sources include but not limited to World Wide Web (hereinafter referred as web), information service providers, broker/dealers, sub-custodians, global custodians, investment managers, depositories, exchanges, as well as newspapers, news feeds, and trade journals. In accordance with the systems and methods described herein, the system is versatile enough to read and process the captured information in any format provided by the corporate news sources, thereby saving the cost and programming efforts.

In one implementation, the corporate action information captured from the different corporate news sources may be filtered based on one or more predefined filtering rules. The filtering rules may be indicative of, for example, instructions to drop or select the corporate action information, either partly or in entirety, based on various parameters, such as information provider, commercial entity associated with the corporate action, and type of corporate action. In an example, the filtering rules may refer to a pre-stored list of selected commercial entities that are of interest to a financial institution or its clients. Accordingly, the corporate action information corresponding to these commercial entities may be selected for the generation of the corporate announcement, while rest of the corporate action information may be dropped or rejected. In another example, the filtering rules may also refer to a pre-stored list of selected information providers, thereby enabling selection of the corporate action information received from such information providers, while dropping the information received from other information providers.

Subsequent to filtering the corporate action information, the corporate action information obtained from different corporate news sources is compared with one another to determine completeness and accuracy of the information. For example, information received from source1, source2 and source3 corresponding to a corporate action1, is compared with one another, to determine whether the information received from source1, source2 and source3 is complete and accurate. It will be appreciated that the information received from multiple sources may convey a similar meaning or a different meaning altogether. For example, the information obtained from source1 may contradict the information obtained from source2 and source3. There may also be a possibility that the information obtained from multiple sources may be incomplete. For example, source1 may indicate that company A has increased its interest rate on XYZ policy. However, percentage of increment may not be mentioned. While, source2 and source3 indicate that the company A has increased its interest rate, but the policy may not be mentioned and/or interest rate may not be mentioned. Such differences or conflicts in the information and incompleteness of the information may be determined, when the information corresponding to each corporate action, which is obtained from multiple sources are compared with one another.

In an implementation, completeness and accuracy determination, collectively referred to as relevance determination, hereinafter, is performed based on a plurality of predefined relevance determination rules. Relevance determination rules, for example, map the captured information to a plurality of attributes, based on the type of corporate action. For example, if a corporate action is dividend announcement, the relevance determination rules may map the captured information to the company name, dividend date, and dividend amount. Based on the mapping, the relevance rules determine completeness or incompleteness in the information. Similarly, relevance determination rules may determine discrepancies in the information, by mapping the information obtained from multiple sources, corresponding to each corporate action with the plurality of attributes. A same attribute, for example, dividend amount having two difference values indicate discrepancies in the information.

Based on such relevance determination, a relevance factor may be evaluated. The relevance factor may indicate, for example, percentage of completeness and accuracy of the composite corporate action information obtained by combining the corporate action information captured from different corporate news sources. The relevant factor may have a predefined threshold associated therewith. Assuming that the predefined threshold is 100% and information is mapped to four attributes, out of which one attribute indicates 'no mapping' or blank entry, the completeness percentage, may be computed as 75%. Further, if one of the attribute out of the filled attributes indicates two different values, the accuracy percentage may be computed as 75%. The relevance factor may be computed based on an average of the completeness and accuracy percentage, which in this example is 75%. It is to be understood that the manner in which computation of the relevance factor is explained does not construe as a limitation, various other computation methodologies known in the art, may be used to compute the relevance factor.

The evaluated relevance factor may be compared with the predefined threshold to determine a course of action. Referring to the above mentioned example, the evaluated relevance factor 75% is compared with the exemplary predefined threshold 100%. It is to be understood that, when the comparison indicates that the relevance factor is at or above the predefined threshold, the composite corporate action information is considered as complete and accurate information. Accordingly, the course of action indicates generation of a corporate announcement.

On the other hand, when the comparison indicates that the relevance factor is below the predefined threshold, as indicated in the above example, the composite corporate action information is treated as incomplete and/or inaccurate. Therefore, the course of action may be further processing of the composite corporate action information for completion of the incomplete information and/or improving accuracy of the information. Improving accuracy of the information may also be understood as validating correctness of the information. Further processing may include application of various predefined processing rules to complete and/or rectify the inaccuracy in the information, and further application of relevance determination rules to determine whether the information is completed and accuracy is improved.

In an example, a processing rule may receive more information from other sources in order to complete the information. Similarly, another processing rule may identify valid news sources based on various factors, such as news category or geography. A valid source may be understood as a reliable source, which is to be relied when a discrepancies in the information is indentified. For instance, in UK source1 may be identified as a valid source, while in Japan source2 may be identified as a valid source. In one more example, source3 may be identified as a valid source for information relating to mergers and acquisition related news, while on the other hand source4 may be identified as a valid source for shares and debentures related information. It will be appreciated that such identification may be based on considerations such as, past performance of a source in geography, promptness of the source and accuracy of the information provided by the source in the past. The processing rules are accordingly configured to select pertinent valid source based on the news category and/or geography, and treat information from such valid source as accurate information to proceed for further processing.

The further processing enables completion the incomplete information and validation of the inaccuracies or discrepancies in the information, until the relevance factor reaches at least the predefined threshold. Once the relevance factor reaches the predefined threshold, a corporate announcement is generated.

The generated corporate announcement may be understood as a 'golden copy' or a 'composite copy' of the corporate action information obtained from different corporate information sources, which is both complete and accurate. In one implementation, the corporate announcement is generated based on one or more announcement generation rules. The generated corporate announcement may be provided to the corporate action information seekers.

The systems and methods described herein are configured to generate more processing rules, based on various pre-existing predefined rules employed in the past to evaluate and process captured corporate action information, and to generate corporate announcements providing complete and accurate corporate action information. It is to be understood that the predefined rules are described previously are only examples and various such rule will be apparent to one skilled in the art. Various other rules may be configured by users and existing predefined rules may be modified by the users, depending upon the business and market conditions and without departing from the scope of the present subject matter.

While aspects of systems and methods for generating corporate announcements can be implemented in any number of different computing systems, environments, and/or configurations, the embodiments are described in the context of the following exemplary system architecture(s).

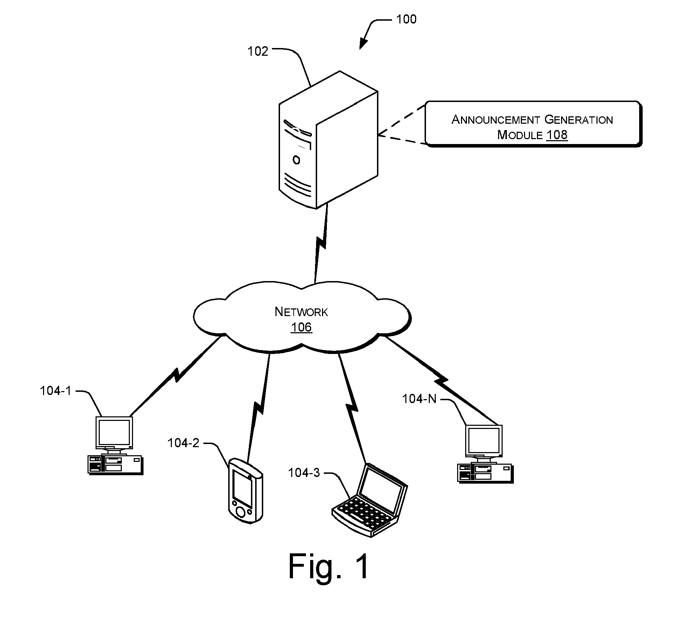

Fig. 1 illustrates a network environment 100 implementing an announcement generation system 102, in accordance with an embodiment of the present subject matter. In one implementation, the network environment 100 can be a company network, including thousands of office personal computers, laptops, various servers, such as blade servers, and other computing devices connected over a network 106.

The announcement generation system 102 (hereinafter referred as system 102) is connected to a plurality of user devices 104-1, 104-2, 104-3,...104-N, collectively referred to as the user devices 104 and individually referred to as a user device 104. The system 102 may be implemented in a variety of computing systems, such as servers, a desktop personal computer, a notebook or portable computer, a workstation, a mainframe computer, and a laptop. The user devices 104 may include, without limitation, desktop computers, laptops or other portable computing devices, and network computing devices. The users, such as members of financial institutions, stakeholders and information providers may use the user devices 104 to interact with the system 102 and to read generated announcements, provide corporate action information and other inputs, such as comments or feeds, etc.

The network 106 may be a wireless network, wired network or a combination thereof. The network 106 can be implemented as one of the different types of networks, such as intranet, local area network (LAN), wide area network (WAN), the internet, and such. The network 106 may either be a dedicated network or a shared network, which represents an association of the different types of networks that use a variety of protocols, for example, Hypertext Transfer Protocol (HTTP), Transmission Control Protocol/Internet Protocol (TCP/IP), and Wireless Application Protocol (WAP), to communicate with each other. Further, the network 106 may include a variety of network devices, including routers, bridges, servers, computing devices, storage devices.

The system 102, according to an implementation of the present subject matter, receives or captures corporate action information corresponding to one or more corporate actions from a multiple corporate news sources in different formats. The system 102 processes the received corporate action information based on a plurality of predefined rules to generate a corporate announcement for each corporate action, where the generated corporate announcement is relevant for stakeholders of the commercial entity initiating the corporation action. The system 102 ensures that each generated corporate announcement is both complete and accurate, since such announcement is material to various stakeholder of the business entity.

In one implementation, the system 102 discards the irrelevant and duplicate corporate action information received from the corporate news sources, and considers only relevant information, for example, selective corporate action information that are of interest to the financial institution or its clients, for generating corporate announcements. The system 102 performs such selection or rejection of the information based on various predefined filtering rules to filter the selective information. The selective information is thereafter used by the system 102 for generation of the corporate announcement.

In one implementation, the system 102 comprises an announcement generation module 108 that receives such filtered or selective corporate action information, process and evaluates the information to generate a corporate announcement, which is composite corporate action information and is readable, complete and accurate.

For generating the corporate announcement, the announcement generation module 108 compares the filtered corporate action information corresponding to a given corporate action, received from various corporate news sources with one another. The comparison of the information, for example, indicates relevance of the information, such as completeness and accuracy of the information. The announcement generation module 108 determines such relevance of the information, based on one or more relevance determination rules.

Upon determining the relevance, the announcement generation module 108 generates a relevance factor indicating, for example, percentage of completeness and accuracy of the composite corporate action information, i.e., the combined information obtained from various corporate news sources. Such percentage may be a combined percentage and/or individual percentage of completeness and accuracy. Further, the relevance factor may have a predefined or default threshold associated therewith. The term predefined threshold may be understood as a limit defined for a relevance factor. A relevance factor below such limit indicates incompleteness and inaccuracy/discrepancies in the information, and the relevance factor above such limit indicates completeness and accuracy of the information.

Based on the relevance factor, the announcement generation module 108 determines a course of action. For example, when the evaluated relevance factor is below the predefined threshold, the course of action includes further processing, such as completing and/or improving the accuracy of the corporate action information. On the other hand, when the relevance factor is at or above the predefined threshold, the course of action includes generating a corporate announcement. The announcement generation module 108 generates the corporate announcement, based on a plurality of predefined processing rules. The announcement generation module 108 ensures that the generated announcements are complete and accurate. Such generated corporate announcement may be provided to the stakeholders.

Thus, the system 102 automatically captures and processes the corporate action information to generate a corporate announcement, which is reliable and material to the stakeholders, and also minimizes user intervention, for example, a professional is not required to invest time and efforts to process the information.

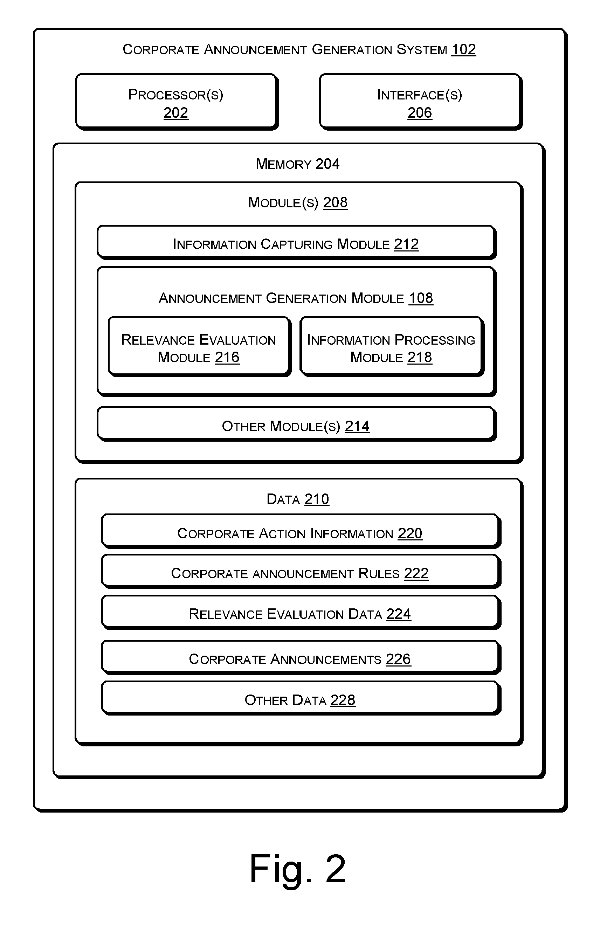

Fig. 2 illustrates components of the corporate announcement generation system 102, according to an embodiment of the present subject matter. In said embodiment, the system 102 includes one or more processor(s) 202, a memory 204 coupled to the processor 202, and interface(s) 206. The processor 202 may be implemented as one or more microprocessors, microcomputers, microcontrollers, digital signal processors, central processing units, state machines, logic circuitries, and/or any devices that manipulate signals based on operational instructions. Among other capabilities, the processor 202 is configured to fetch and execute computer-readable instructions and data stored in the memory 204.The interface(s) 206 may include a variety of software and hardware interfaces, for example, a web interface, a graphical user interface, allowing the system 102 to interact with the user devices 104. Further, the interface(s) 206 may enable the system 102 to communicate with other computing devices, such as web servers and external data servers (not shown in figure). The interface(s) 206 can facilitate multiple communications within a wide variety of networks and protocol types, including wired networks, for example LAN, cable, and wireless networks such as WLAN, cellular, or satellite. The interface(s) 206 may include one or more ports for connecting the system 102 to a number of other devices to or to another server.

The memory 204 may include any computer-readable medium known in the art including, for example, volatile memory such as static random access memory (SRAM) and dynamic random access memory (DRAM), and/or non-volatile memory, such as read only memory (ROM), erasable programmable ROM, flash memories, hard disks, optical disks, and magnetic tapes. The memory 204 also includes module(s) 208 and data 210.

The modules 208 include routines, programs, objects, components, data structures, etc., which perform particular tasks or implement particular abstract data types. The modules 208 further include an information capturing module 212, an announcement generation module 108, and other modules 214. The other modules 214 may include programs or coded instructions that supplement applications and functions on the system 102. In one implementation, the announcement generation module further includes a relevance evaluation module 216 and an information processing module 218.

The data 210, amongst other things, serves as a repository for storing data processed, received, and generated by one or more of the module(s) 208. The data 210 includes corporate action information 220, corporate announcement rules 222, relevance evaluation data 224, corporate announcements 226, and other data 228. The other data 228 may include data generated as a result of the execution of one or more modules in the other modules 214.

The system 102, in accordance with an embodiment of the present subject matter, captures corporate action announcement information corresponding to one or more corporate actions from corporate news sources, and process the information to produce a corporate announcement. Such a corporate announcement is composite corporate action information (also referred as golden copy or composite copy), which is filtered, reliable, complete and accurate.

In operation, the information capturing module 212 within the system 102 captures the corporate action information from various corporate news sources including but not limited to information service providers, broker/dealers, sub-custodians, global custodians, investment managers, depositories, exchanges, as well as newspapers, news feeds, trade journals and the World Wide Web (Web).

In one implementation, the information capturing module 212 is scheduled to capture the corporate action information. For example, the information capturing module 212 may be scheduled to automatically capture the corporation action information at pre-set intervals, for example, once or twice at a pre-set time every day, or at the end of each day. Alternatively, the information capturing module 212 may be configured to capture the corporate action information regularly, for example, 24 hours a day, 7 days a week. Further, the information capturing module 212 may capture the corporate action information corresponding to one or more corporate actions either individually or in bulk.

In one embodiment, the users, such as vendors or information providers may use the user devices 104 communicating with the system 102 via the network 106, to feed corporate action information into the system 102. The information capturing module 212 within the system 102 receives such corporate action information for announcement generation.

The information capturing module 212 filters such captured information based on one or more predefined filtering rules stored within corporate announcement rules 222. The filtering rules may include but not restricted to drop rules and selection rules for dropping and selecting corporate action information based on a variety of parameters respectively. Such parameters may be, for example, source of the information, business entity or entities responsible for initiating corporate actions and type of corporate action. The filtering rules enables selection of corporate action information corresponding to relevant corporate actions that may be of interest to different entities and stakeholders, or that may have an impact on the entities and stakeholders. For example, the filtering rules may be indicative of a pre-stored list of selected information providers, including includes vendors A and B. In said example, upon receiving the information from the plurality of vendors, the information capturing module 212 selects the information received from the vendors A and B, thereby dropping the information received from other vendors.

In an implementation, the information capturing module 212 may also identify duplicate information, if any, and eventually drop the duplication information arriving from, for example, same information providers to avoid redundancy. The information capturing module 212 stores the filtered captured information within the corporate action information 220 within the system 102.

Based on the filtered information, a corporate announcement is generated for each corporate action. In one implementation, the announcement generation module 108 within the system 102 generates the corporate announcement by processing the filtered corporate action information. The announcement generation module 108 receives corporate action information as input and generates corporate announcement as output. It is to be understood that the generated corporate announcement represents the composite corporate action information, which is obtained by processing, for example, correlating and comparing the filtered corporate action information obtained from multiple corporate news sources.

In one implementation, the relevance evaluation module 216 within the announcement generation module 108 compares the filtered corporate action information corresponding to each corporate action, obtained from multiple corporate news sources to ascertain whether the information is complete and accurate. The relevance evaluation module 216, for example, evaluates a relevance factor based on the completeness and accuracy of the composite corporate action information, which is obtained by combining the corporate action information obtained from multiple sources as ascertained from the comparison. The relevance factor may indicate percentage of completeness and accuracy in the composite corporate action information. Such relevance factor is stored within the relevance evaluation data 224. The relevance factor as described herein may be a considered as a criterion to decide a course of action in order to provide complete and accurate information in form of corporate announcement to the stakeholders.

The relevance factor may have a predefined threshold associated therewith. In an example, the threshold is 100%, which means that the relevance factor above this threshold indicates complete and accurate corporate action information. While, the relevance factor at or below this threshold indicate incomplete information, inaccurate information or both incomplete and inaccurate information. For example, a total relevance factor 75% may indicate that the information is incomplete and/or inaccurate, and break-up of the relevance factor indicates that the completeness is 100% but accuracy is 50%, thereby indicating that the information is inaccurate.

Such comparison of the corporate information and evaluation of the relevance factor is based on one or more predefined relevance evaluation rules stored within the corporate announcement rules 222. The relevance evaluation rules may include but not limited to completeness rules, and accuracy rules.

The completeness rules may determine, for example, whether the information is complete or incomplete. For example, corporate information indicates that company ABC has announced a bonus to its stakeholders. However, an amount of the bonus is not mentioned in the corporate information. The completeness rules are configured to identify whether various parameters associated with a types of news is available or not, therefore, identifying the incompleteness of the information. For example, for a corporation action 'dividend announcement', the relevance determination rules may determine incompleteness based on parameters 'company name', 'dividend date', and 'dividend amount'.

The accuracy rules may determine, for example, any discrepancies in the information. For example, corporate information from a vendor indicates that company ABC has increased its interest rate to 9%. However, corporate information from another vendor indicates that the company ABC has increased its interest rate to 9.3%. The accuracy rules identify such discrepancies in the information, for example, by comparing the information obtained from one vendor with the information obtained from other vendors. Assuming that corporate action information corresponding to one corporate action has been captured from three vendors, namely, vendor1, vendor2, and vendor3, the accuracy rules map the information obtained from vendor1, vendor2 and vendor3 to a various parameters associated with types of news. For example, for a corporation action 'dividend announcement', the information obtained from all the three vendors is mapped to the parameters 'company name', 'dividend date', and 'dividend amount'. When any of the parameter indicates different information, inaccuracy or discrepancies is determined. In the above example, if the dividend amount indicates two different values, conflict or discrepancies in the information is identified.

Based on the comparison, the relevance evaluation module 216 evaluates the relevance factor. The relevance factor may be evaluated based on a variety of predefined parameters specified in the comparison rules, for example, corporate action type, instrument type, and amount/value. As described previously, the relevance factor indicates the percentage of completeness and accuracy of the information. Such percentage may be an average of the completeness percentage and accuracy percentage. In addition, the relevance factor also indicates a break up of the completeness percentage and accuracy percentage. The relevance evaluation module 216 compares the relevance factor with the threshold to determine a course of action.

The course of action described herein may be instructions for further processing, such as completing the information, when the relevance factor provides an indication that the information is incomplete, and another course of action may be another further processing, such as validation of the information or improving accuracy of the information, when the relevance factor indicates that the information is inaccurate or have certain discrepancies. In a scenario where the relevance factor is 100%, thereby indicating that the information is complete and accurate, the course of action may be generating corporate announcement. Each generated corporate announcement is stored within the corporate announcements 226. Considering another scenario, where the relevance factor is 80%, thereby indicating that the information is incomplete and inaccurate, the course of action in such a scenario may be further processing, such as completion and/or validation of the information for generating the corporate announcement.

In operation, the information processing module 218 performs such further processing based on various predefined processing rules stored within the corporate announcement rules 222. For further processing, the information processing module 218, for example, may apply the predefined processing rules to complete and/or validate the inaccuracy in the information.

For example, a processing rule may enable generation of a prompt or alert to receive more information from other sources in order to complete the information. Similarly, another processing rule may identify valid news sources based on various factors, such as news category or geography. A valid source may be treated as a reliable or a preferred source, which is to be relied, when conflicts or discrepancies in the information are indentified. For example, each corporate news source may have different priority associated therewith. Such priorities are predefined by various users, and may be modified by the users at any point of time. Such priorities may be assigned on the basis of region based expertise of a corporate news source, market based expertise of a corporate news source, reliability of a corporate news source, etc. For example, in case of conflicting corporate actions information from corporate news source A and corporate news source B in United states, the information processing module 218 may rely on the corporate news source A, whereas for a similar situation in Europe, it can rely on the news source B.

In one implementation, the processing rules may direct the information processing module 218 to generate an alert to the user requiring assistance of the user at any stage of the processing, to ensure that the composite information or the corporate announcement that is generated as an output is complete and accurate at any cost. For example, a content verification rules may be a type of processing rule, which generates an alert to a user for verifying content of the generated corporate announcement before providing it to the stakeholders or clients.

Along with completeness and accuracy, the further processing also includes application of other rules, such as match processing rules, source-parameter mapping rules, narrative rules, update constraint rules, security mapping rules, restricted security rules and instrument hierarchy rules, to further refine the corporate action information. In an implementation, the information processing module 218 performs further processing of the information, based on the above mentioned one or more predefined processing rules.

For the sake of clarity, a brief description of such processing rules used for further processing is provided below. It is to be understood that the processing rules mentioned above are exemplary rules, and described herein only for the purpose of explanation. Various other types of processing rules may also be included to further refine the corporate action information and ensure that the corporate announcement generated as an output is material for the stakeholders.

The source-parameter mapping rules identify various corporate action parameters specified in the corporate action information received from corporate news sources by comparing it with a pre-stored list of corporate action parameters corresponding to the corporate news source. It is well appreciated that each corporate new source may follow different abbreviations or format for writing a same corporate action parameter. For example, a corporate news source XYZ may write interest rate as 'INTR'. While, another vendor ABC may write `INT' as interest rate. Thus, each corporate news source has a specific format for writing different corporate action parameters including interest rate, dividend, and tender. The information processing module 218 maps the corporate action information received from the corporate new sources with the pre-stored list of corporate action parameters corresponding to each corporate news source, to determine or interpret the meaning of the corporate action conveyed by the corporation action information. In one implementation, the information processing module 218 may replace the corporate action parameters defined in a variety of formats with a common default corporate action parameter. For example, the INTR and INT may be replaced with a default corporate action parameter 'Interest rate'.

The security mapping rules may determine, for example, whether a security on which corporate action has been announcement is present in a list of predefined securities held by various stakeholder or clients of a financial institution, where the system 102 is employed. Based on the determination, the information processing module 218 may choose to drop the corporate action information. It is to be understood that such a predefined list of securities keeps on updating with current list of securities. It is well appreciated that each security on which corporate action information is announcement by various corporate news sources will have a corresponding security ID associated therewith. In one implementation, the security mapping rules may compare the security identifier (ID) of the corporate announcement with the security ID of preexisting corporate announcements, to avoid the possibility of generation of two corporate announcements with same security identifier (ID).

The match processing rules may determine whether a corporate announcement for the corporate action information already exists. If the corporate announcement exists, the information processing module 218 may either not generate the corporate announcement again or may choose to update an existing corporate announcement, based on various parameters. The match processing rules may determine, for example, whether the corporate action information matches exactly with a preexisting corporate announcement, match potentially or does not match at all. The information processing module 218 may choose not to generate a corporate announcement, if an exact match is found. On the other hand, the information processing module 218 may decide to generate a corporate announcement if no match is found. Further, the information processing module 218 may choose to repair or update the corporate announcement by generating an alert for the user on the user device requiring the user's assistance, when a potential match is found. The potential match may be understood as a match when the corporate announcement falls within a predefined matching tolerance range.

The update constraint rules may specify various predefined conditions for updating a corporate announcement. When such conditions are fulfilled, the information processing module 218 automatically updates the generated corporate announcement before providing it to the user. Such conditions may be based on, for example, corporate action type, and corporate action initiation date.

The narrative rules may determine, for example, whether a narrative mentioned in any of the captured corporate action information is to be included in the corporate announcement that is to be generated. The information processing module 218 may include the narrative, drop the narrative, and prompt the user for a user narrative, based on the narrative rules.

Restricted security rules, for example, restricts the information processing module 218 to process the corporate actions information for certain specific securities. In operation, the information processing module 218 refer to a pre-stored list of securities, and process the corporate action information based on the list. For example, the list of security may indicate the securities in which financial institution or its clients are interested. Consider a case, where the information processing module 218 receives the corporate action information corresponding to a security A, now the restricted security rules will compare the security A with the list of pre-stored securities. If a match is found, the information processing module 218 process the corporate action information. Otherwise, the corporate action information is dropped.

Instrument hierarchy rules, for example, apply a predefined security identification scheme, such as Committee on Uniform Security Identification Procedures (CUSIP), International Securities Identification Number (ISIN), and Stock Exchange Daily Official List (SEDOL) to the corporate announcement before it is provided to the recipients. The information processing module 218 is configured to apply these security schemes, based on a scheme priority assigned to the schemes. For example, CUSIP may be assigned the scheme priority 1, ISIN may be assigned the scheme priority 2, and the SEDOL may be assigned the scheme priority 3. In said example, a corporate announcement may be assigned with scheme type CUSIP having highest priority.

The information processing module 218 thus performs processing of the information based on the predefined processing rules described above, to generate one corporate announcement for each relevant corporate action. The information processing module 218 stores the processing data generated by application of each processing rule within the other data 228, and the generated corporate announcements within the corporate announcements.

The system 102 captures, filters, evaluates and refines the corporate action information obtained from various corporate news sources in a more automated fashion, to generate corporate announcements, which are complete, accurate and clean.

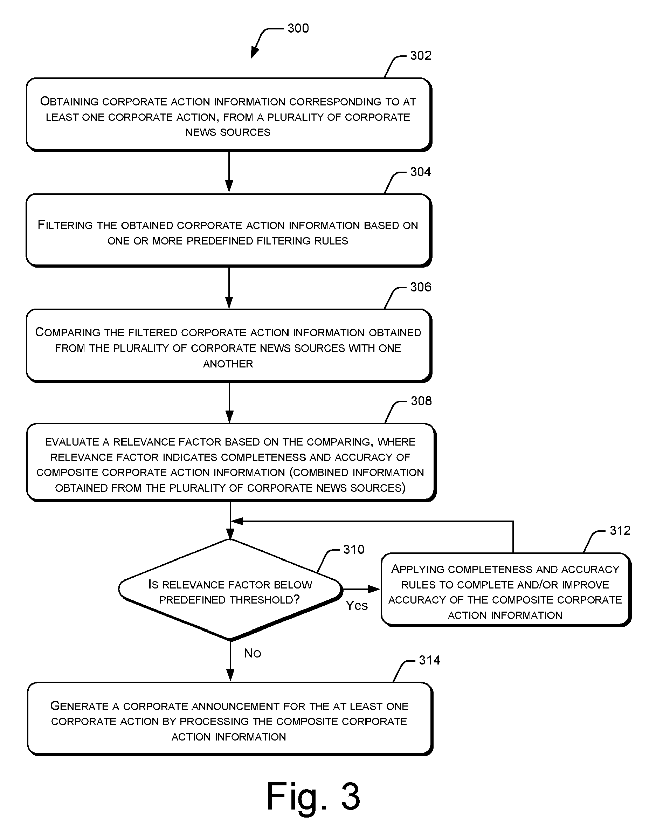

Fig. 3 illustrates an exemplary method 300 for corporate announcement generation, in accordance with an implementation of the present subject matter. The exemplary method may be described in the general context of computer executable instructions. Generally, computer executable instructions can include routines, programs, objects, components, data structures, procedures, modules, functions, etc., that perform particular functions or implement particular abstract data types. The method may also be practiced in a distributed computing environment where functions are performed by remote processing devices that are linked through a communications network. In a distributed computing environment, computer executable instructions may be located in both local and remote computer storage media, including memory storage devices.

The order in which the method is described is not intended to be construed as a limitation, and any number of the described method blocks can be combined in any order to implement the method, or an alternative method. Additionally, individual blocks may be deleted from the method without departing from the spirit and scope of the subj ect matter described herein. Furthermore, the method can be implemented in any suitable hardware, software, firmware, or combination thereof.

At block 302, corporate action information corresponding to at least one corporate action is obtained from a plurality of corporate news sources. A corporate action may be understood as an event that is initiated by a business entity, such as a corporation. The corporate actions may include, for example, stock splits, mergers of a business entity with another business entity, acquisition by a business entity by another business, tender offers, and stock dividends. The plurality of corporate news sources from where such corporate action information is obtained, may include but not limited to information service providers, broker/dealers, sub-custodians, global custodians, investment managers, depositories, exchanges, as well as newspapers, news feeds, trade journals and the World Wide Web (Web). In operation, an information capturing module 212 of a system 102 may obtain the corporate action information from one or more of above mentioned corporate news sources.

At block 304, the obtained corporate action information is filtered based on one or more predefined filtering rules to obtain selective corporate action information. It is well appreciated that the corporate action information relating to various business entities is obtained from various corporate news sources. Accordingly, all the obtained information may not be relevant for a financial institution or its clients. Therefore, the obtained information may be filtered to select the information that is of interest to the financial institution or its clients. In operation, the information capturing module 212 filter the corporate action information based on various predefined filtering rules stored within the corporate announcement rules 222. Such filtering rules may select or reject the corporate action information based on pre-stored preferences of users, such as members of a financial institution.

At block 306, the filtered or selected corporate action information corresponding to the at least one corporate action obtained from the plurality of corporate news sources is compared with one another. For example, corporate action information obtained from corporate news source A and corporate action information obtained from corporate news source B is compared with one another. In operation, the announcement generation module 108 compares the corporate action information captured from various news sources with one another.

At block 308, a relevance factor is evaluated based on the comparison. The relevance factor is, for example, indicative of completeness and accuracy of a composite corporate action information, which is obtained by combining the corporate action information obtained from the plurality of corporate news sources. In one implementation, the relevance factor indicates percentage of completeness and accuracy of the composite corporate action information. In operation, a relevance evaluation module 216 evaluates the relevance factor, based on predefined relevance evaluation rules stored within the corporate announcement rules 222.

At block 310, a determination is made whether the evaluated relevance factor is below a predefined threshold. A predefined threshold may be understood as a limit defined for a relevance factor. A relevance factor below such limit indicates incompleteness and inaccuracy/discrepancies in the information, and the relevance factor above such limit indicates completeness and accuracy of the information. In operation, the relevance evaluation module 216 performs such comparison.

If the determination yields that the relevance factor is below the predefined threshold (`Yes' branch from block 310), the corporate action information is further processed by applying, for example, predefined completeness and/or accuracy processing rules to complete and rectify the discrepancies or inaccuracies in the information, i.e., improve accuracy of the information, at block 312. In operation, an information processing module 218 perform such further processing, based on the processing rules, such as completeness and validation processing rules to process the information. The information processing module 218 repeatedly processes the information and performs comparison at block 308 till the relevance factor reaches the predefined threshold.

If the determination yield that the relevance factor is not below the predefined threshold ('No' branch from block 310), the corporate announcement is generated by processing the composite corporate action information at block 314. Such processing is based one or more processing rules. Examples of such processing rules may include match processing rules, vendor-corporate action type mapping rules, narrative rules, update constraint rules, security mapping rules, restricted security rules and instrument hierarchy rules to further refine the corporate action information, in order to generate the corporate announcement, which is complete, accurate and refined. In operation, the information processing module 218 generates the corporate announcements based on the processing rules.

Although embodiments for corporate announcement generation have been described in language specific to structural features and/or methods, it is to be understood that the invention is not necessarily limited to the specific features or methods described. Rather, the specific features and methods are disclosed as exemplary implementations for the corporate announcement generation systems and methods.

## Claims

1. A method comprising:
capturing, by a computing device, corporate action information corresponding to at least one corporate action from at least one corporate news source;
comparing the corporate action information with another corporate action information, captured from at least one other corporate news source, corresponding to the at least one corporate action;
evaluating a relevance factor based on the comparing, wherein the relevance factor is indicative of completeness and accuracy of a composite corporate action information obtained by combining the corporate action information and the another corporate action information; and
generating a corporate announcement, based on the relevance factor.

2. The method as claimed in claim 1 further comprising applying at least one of completeness rules and accuracy rules on the composite corporate action information for completing and improving accuracy of the composite corporate action information, when the relevance factor is below a predefined threshold.

3. The method as claimed in claim 1, wherein the generating comprises processing the composite corporate action information based on one or more processing rules.

4. The method as claimed in claim 3, wherein the one or more processing rules comprises match processing rules, source-parameter mapping rules, narrative rules, update constraint rules, security mapping rules, restricted security rules, and instrument hierarchy rules.

5. The method as claimed in claim 1 further comprising filtering the corporate action information based on at least one filtering rule.

6. The method as claimed in claim 1, wherein the relevance factor is evaluated based on at least one relevance evaluation rule.

7. A corporate announcement generation system (102) comprising:
a processor (202); and
a memory (204) coupled to the processor (202), the memory (204) comprising:
an information capturing module (212) configured to capture corporate action information corresponding to at least one corporate action from at least one corporate news source; and
an announcement generation module (108) configured to,
compare the corporate action information with another corporate action information captured from at least one other corporate news source, wherein the another corporate action information corresponds to the at least one corporate action;
evaluate a relevance factor based on the comparison, wherein the relevance factor is indicative of completeness and accuracy of the corporate action information and the another corporate action information; and
generate a corporate announcement, based on the relevance factor.

8. The corporate announcement generation system (102) as claimed in claim 7, wherein the information capturing module (212) is further configured to filter the corporate action information based on at least one filtering rule.

9. The corporate announcement generation system (102) as claimed in claim 7, wherein the announcement generation module (108) is further configured to apply at least one of completeness rules and accuracy rules on the composite corporate action information to complete and improve accuracy of the composite corporate action information, when the relevance factor is below a predefined threshold.

10. The corporate announcement generation system (102) as claimed in claim 7, wherein the announcement generation module (108) is configured to generate the corporate announcement based on one or more processing rules.

11. The corporate announcement generation system (102) as claimed in claim 10, wherein the processing rules includes match processing rules, source-parameter mapping rules, narrative rules, update constraint rules, security mapping rules, restricted security rules, and instrument hierarchy rules.

12. A computer-readable medium having embodied thereon a computer program for executing a method comprising:
capturing, by a computing device, corporate action information corresponding to at least one corporate action from at least one corporate news source;
comparing the corporate action information with another corporate action information, captured from at least one other corporate news source, corresponding to the at least one corporate action;
applying at least one of completeness rules and accuracy rules on the composite corporate action information for completing and improving accuracy of the composite corporate action information, when the relevance factor is below a predefined threshold; and
generating a corporate announcement by processing the composite corporate action information based on one or more processing rules, when the relevance factor is not below the predefined threshold.
